# EUROPEAN PATENT SPECIFICATION

(11) **EP 0 398 684 B1**
(45) Date of publication and mention of the grant of the patent: **24.09.1997**
(21) Application number: 90305282.7
(22) Date of filing: 16.05.1990
(51) Int. Cl.: C08G 77/46, C08G 77/34

(54) **Method for purifying polyether silicones**
Verfahren zur Reinigung von Polyethersiloxanen
Méthode de purification de polyéthersiloxanes

(30) Priority: 17.05.1989 JP 123053/89
(43) Date of publication of application: 22.11.1990
(73) Proprietor: SHIN-ETSU CHEMICAL CO., LTD., Chiyoda-ku Tokyo (JP)
(72) Inventor: Ichinohe, Shoji, Annaka-shi, Gunma-ken (JP); Kawamoto, Hideyuki, Annaka-shi, Gunma-ken (JP)
(74) Representative: Dixon, Donald Cossar

(56) References cited:
- EP-A- 0 111 933
- EP-A- 0 314 903
- US-A- 4 059 605
- US-A- 4 150 048
- US-A- 4 515 979

## Description

This invention relates a method for purifying polyether silicones which develop very little odor with the passage of time even when blended with water-based systems; and to a method of treating polyether silicones to obtain purified polyether silicones.

Conventionally, polyether silicones are obtained by an addition reaction of a hydrogen siloxane and a polyoxyalkylene containing a terminal double bond in the presence of a noble metal catalyst such as chloroplatinic acid.

However, when the polyether silicones thus obtained are used in an emulsion system, they tend to develop an odor and are therefore difficult to incorporate in cosmetics. This characteristic was thought to be due to the fact that the polyether silicones suffered oxidative degradation with the passage of time to produce aldehydes.

We have studied the mechanism of this odor development in more detail and found that it is due to an internal rearrangement side reaction of the polyoxyalkylene in the presence of the platinum catalyst with the result that it does not react with the hydrogen siloxane and remains in the polyether silicone produced by the main reaction; and that the odour is also due to unreacted polyoxyalkylene remaining in the polyether silicone and decomposing with time to produce ketones and aldehydes.

When for example allyl ether polyether is used as the polyoxyalkylene and reacted with a hydrogen siloxane in the presence of a platinum catalyst, the allyl group undergoes an internal rearrangement as a side reaction so as to produce propenyl ether polyether. This propenyl ether polyether however does not react with the hydrogen siloxane, and it therefore remains as an impurity in the polyether silicone produced by the main reaction. Unreacted allyl polyether also remains as an impurity in the polyether silicone. Further, unreacted allyl polyether is gradually isomerized by the remaining platinum catalyst into propenyl ether polyether.

It appears that when water acts on the polyether silicone containing these impurities, the propenyl ether is cleaved, and propionaldehyde, which has an unpleasant odor, is produced. This reaction is accelerated in the presence of acid, and the reaction rate increases the lower the pH.

We have found that by treating polyether silicones containing such impurities with water, an aqueous solution having a pH no greater than 7 or acidic material, so as to produce odorous substances, and then eliminating these substances, the polyether silicones no longer developed any unpleasant odor with the passage of time.

One object of this invention is therefore to provide polyether silicones which do not have an unpleasant odor even after being kept for a long period of time.

A further object of this invention is to provide a method of treating polyether silicones which acquire an unpleasant odor with the passage of time, such that they become odorless.

The above objects are attained by purified polyether silicones manufactured by an addition reaction of a hydrogen siloxane and a polyoxyalkylene containing a terminal double bond, characterized in that the total quantity of ketones and aldehydes produced by treatment in a closed system for 24 hours with a quantity of 10⁻⁴ aqueous hydrochloric acid equivalent to the quantity of said polyether silicones at 60°C, is no greater than 1,000 ppm of said polyether silicones.

The polyether silicones used in this invention are manufactured by an addition reaction of at least one hydrogen siloxane represented by one or more of the following structural formulae: 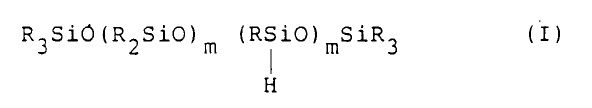 where R is a univalent substituted or unsubstituted hydrocarbon group, m is O or a positive integer, and n is a positive integer; 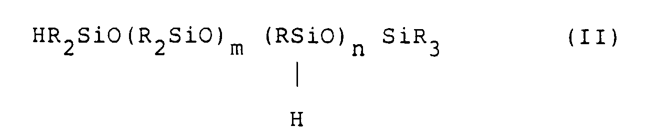 where R and m have the same significance as in formula (I), and n is O or a positive integer; and 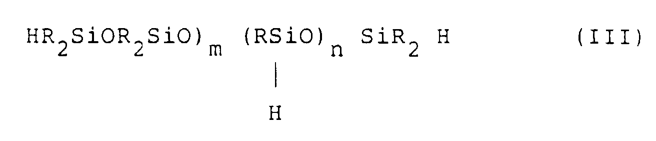 where R, m and n have the same significance as in formula (II);
with a polyoxyalkylene (polyether) represented by the formula:

BO(CₚH₂ₚO)ₓ R" (IV)

where B is a hydrocarbon group containing terminal double bonds, R" is hydrogen or a low grade alkyl group or acyl group, p is 2 or 3, and x is a positive integer; in the presence of a platinum catalyst.

In this invention, it is preferable that the main component of the polyether silicone is an organopolysiloxane-containing polyoxyalkylene group represented by the formula: 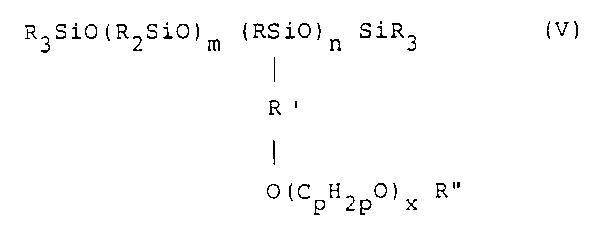 where R, m and n have the same significance as in formula (I); R", p and x have the same significance as in formula (IV); and R' is a bivalent hydrocarbon group), or 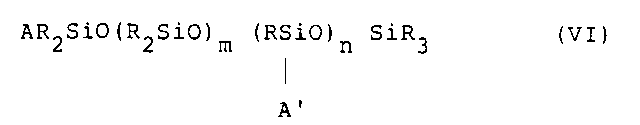 where A and A' are both represented by the formula: -R'O(CₚH₂ₚO)ₓ R"; R, R', R", m, p and x have the same significance as in formula (V); and n is O or a positive integer, or 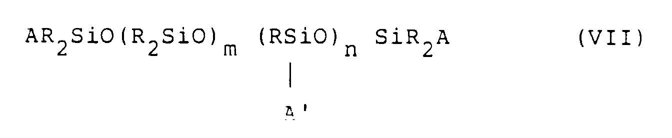 where A, A', R, m and n have the same significance as in formula (VI).

Said addition reaction can be performed in organic solvent such as an alcohol (e.g. ethanol and isopropyl alcohol), aromatic hydrocarbon (e.g. toluene and xylene), ethers (e.g. dioxane and THF), aliphatic hydrocarbon, ester, ketone or chlorinated hydrocarbon. The reaction temperature is normally 50 - 150°C. Post-reaction treatment is then carried out by completely reacting SiH with an excess of polyoxyalkylene, or reacting residual SiH with a compound containing double bonds such as 1-hexene to completely eliminate SiH, or adding an alkaline substance such as caustic soda to dehydrogenate the SiH.

Polyether silicones are normally manufactured by removing solvent from the above reaction solution. In the above process, and in particular when the addition reaction is carried out in the presence of a platinum catalyst, an internal rearrangement of the terminal double bond of said polyoxyalkylene takes place. In the case of a terminal allyl ether polyoxyalkylene, a propenyl ether polyoxyalkylene (propenyl ether polyether) is produced.

Even if an excess of hydrogen siloxane is used with respect to the theoretical quantity of polyoxyalkylene containing terminal double bonds, isomerization of the polyoxyalkylene still takes place at the same time as the main addition reaction, and so the formation of a polyether isomerization product containing internal double bonds is inevitable. Moreover, as is well known in silicone chemistry research, polyethers with internal double bonds do not react with hydrogen siloxanes, and therefore inevitably remain in the system.

For these reasons, the polyether silicones synthesized so far in the presence of a platinum catalyst always contained some residual polyethers with terminal and internal double bonds, and the degree of unsaturation of the whole system was no less than 0.02.

Polyether silicones tend to become more acid with time due to oxidative degradation of these polyethers, and if such polyether silicones are incorporated in water-base cosmetics, the system becomes acid. Propenyl ether polyether is however gradually decomposed by aqueous solutions of pH greater than 7, and propionaldehyde is produced which has an unpleasant odor.

Due to the unpleasant odor produced with time described above, it was difficult to incorporate large quantities of polyether silicones into hair-care, skin-care and make-up cosmetics, and it was particularly difficult to incorporate them into skin-care and make-up cosmetics applied close to the nose. In this invention, therefore, to overcome these disadvantages, polyether silicones are treated with water of pH no greater than 7 containing mineral acid, organic acid, or Lewis acid, or acidic substance alone, this treatment preferably being carried out with the application of heat, so as to decompose residual propenyl ether polyether, and produced propionaldehyde is then removed.

The purified polyether silicones thus obtained contain practically none of the polyethers with double bonds present in the polyether silicones prior to treatment. The degree of unsaturation of said polyether silicones (meq/g) easily attains a level of no greater than 0.02, and may even be no greater than 0.002. The quantity of ketones and aldehydes produced by ageing in 10⁻⁴N hydrochloric acid at 60°C for 24 hours is therefore no greater than 1,000 ppm, and may be no greater than 100 ppm, of the polyether silicone.

In the case of polyether silicones in which the degree of modification of properties due to polyethers is small because the blending proportion of polyethers containing terminal double bonds is small, the quantity of ketones and aldehydes after ageing may be no more than 1,000 ppm, even if the treatment of this invention is not performed.

In such cases, the odor of the polyether silicones is easily removed, and if they are aged by the method of this invention, the quantity of aldehydes and ketones produced may well attain a level of 10 ppm or less.

Said polyethers containing double bonds may be decomposed by acids alone without the concurrent use of water, but if water is not used, a large quantity of acid will required.

In the present invention any acid such as mineral acid, organic acid or Lewis acid can be used.

The mineral acids that can be used include hydrochloric acid, sulfuric acid, nitric acid, carbonic acid and phosphoric acid.

The organic acids that can be used include formic acid, acetic acid, carboxylic acids such as trifluoroacetic acid, sulfonic acid, sulfenic acid, phenols, and primary and secondary nitro-compounds.

The Lewis acids that can be used include Aℓ Cℓ₃, FeCℓ₃, TiCℓ₄, BF₃ and Et₂O. These acids may be used either alone or in conjunction with water, but when it is necessary to remove the acid, it is preferable to use low boiling acids such as hydrochloric acid, formic acid, acetic acid and trifluoroacetic acid. For efficiency of the treatment, it is desirable to use strong acid such as hydrochloric acid or trifluoroacetic acid. In general, it is preferable to use the acids in conjunction with water rather than alone, and preferable to heat to a temperature below the boiling point of water. In this way, the decomposition of polyethers containing internal double bonds proceeds more rapidly.

If for example hydrochloric acid is used as the treatment agent, a concentration of 10⁻⁴N hydrogen chloride is sufficient, and the pH of the hydrochloric acid will then be 4.0. To further accelerate the decomposition reaction, 10⁻³N hydrochloric acid may be used. If about 10 weight % of this acid is used for a polyether silicone obtained from allyl ether polyether, for example, the decomposition reaction is complete in several hours, and polyethers with internal double bonds such as propenyl ether polyether are almost completely eliminated. In this case, the amount of hydrogen chloride used with respect to the polyether silicone will be 3.6 ppm.

In this invention, instead of using the above method, it is also effective to add concentrated hydrochloric acid first and introduce steam later, but in this case care must be taken that concentrated hydrochloric acid does not flow out of the system together with the steam.

Further, a high boiling acid may be added and steam introduced later. In this case, the polyether containing internal double bonds can be decomposed in even less time; however it may be necessary to neutralize any remaining acid. In any case, if water is used in conjunction with strong acid, it is sufficient if the quantity of acid is several ppm with respect to the quantity of polyether silicone. If the treatment temperature is increased to 80°C or more and the treatment time to 10 hours or more, the quantity of acid may be decreased accordingly by one or two digits.

The quantity of water used may be chosen as convenient, but should preferably be 0.1 - 100 weight % and more preferably 1 - 10 weight % with respect to the quantity of polyether silicone.

In this invention, hydrochloric acid may for example be added to the polyether silicone to decompose polyethers containing double bonds after removal of solvent. Alternatively, hydrochloric acid may be added to the reaction solution after the addition reaction of hydrogen siloxane with polyethers containing terminal double bonds in the presence of the platinum catalyst to decompose the polyethers, thereby provoking the formation of odorous aldehydes and ketones and eliminating them together with the hydrogen chloride and solvent.

From the viewpoint of productivity, it is preferable to use the latter method wherein an aqueous solution of pH no greater than 7 is added to the post-reaction solution, heating and stirring, and then carrying out a strip purification.

Said strip purification may be carried out under normal pressure or under reduced pressure. It is however preferable to use a temperature no greater than 120°C, and to carry out an efficient strip purification under these temperature conditions, the purification should either be carried out under reduced pressure or in a flow of inert gas.

In the prior art, odorous constituents were often eliminated from substances by steam distillation in order to render them odorless. However, even if polyether silicones were to be rendered odorless by this procedure, the decomposition of polyethers with double bonds which are present in the polyether silicones as impurities was incomplete. As a result when the polyether silicones were blended in a water-based system, aldehydes and ketones were invariably produced, and it was impossible to prevent the polyether silicones from acquiring an odor.

In this invention on the other hand, the polyethers with double bonds which are present in the polyether silicones as impurities are completely decomposed into aldehydes or ketones and polyoxyalkylene glycol. These aldehydes and ketones are then eliminated so that even if the purified polyether silicones are blended in a water-based system, they do not develop an unpleasant oder with time.

The polyether silicones can thus be used in applications from which they were formerly precluded, and the present invention is therefore highly useful.

### EXAMPLES

The invention is now described in more detail with reference to specific Examples, but it should be understood that the invention is by no means limited to them.

### Example 1.

717 g of a hydrogen siloxane of average composition: 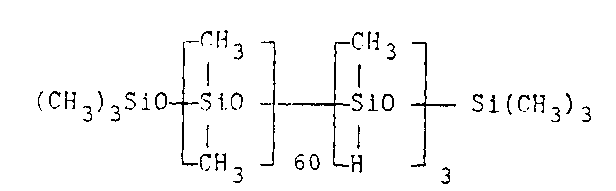 219 g of an allyl polyether represented by the average composition: CH₂=CHCH₂O(CH₂CH₂O)₉CH₃, 655 g of ethyl alcohol and sufficient quantity of neutralized chloroplatinic acid to give a platinum concentration of 5 ppm by weight with respect to the allyl polyether were weighed out, stirred at a temperature of 80°C, and reacted together for 5 hours. The remaining SiH was eliminated by adding hexane, the reaction solution was strip purified under reduced pressure, and filtered to obtain the polyether silicone (VIII).

800 of the polyether silicone (VIII) obtained was treated with 50 g of 10⁻³N hydrochloric acid, and stirred at 90°C for 4 hours. Another strip purification was then carried out under reduced pressure followed by filtration to give the purified polyether silicone (IX). The viscosity ( η²⁵), density (d²⁵) and refractive index (nₚ²⁵) of this polyether silicone (IX) were 217 cs, 1.000, and 1.4170 respectively.

### Propionaldehyde Generation Test

1 g of polyether silicone and 1 g of 10⁻⁴ N hydrochloric acid were weighed out in a 20 mℓ vial, and the vial sealed by a rubber septum with an aluminium cap.

Next, after ageing at 60°C for 24 hours in a drier, 1 µl of the aqueous layer or homogeneous layer which had separated was withdrawn under seal by a syringe, and the propionaldehyde was determined by a gas chromatograph equipped with a hydrogen flame detector (FID), a polyethylene glycol type column packing being used. Also, after determining the quantity of propionaldehyde, the rubber septum was removed and an odor test was performed.

### Test of Unsaturation Degree

The degree of unsaturation was measured from the proton NMR spectrum of the polyether silicone (400 MHz). The signals with a chemical shift of 4.5 - 6.5 were integrated, the intensity ratio with respect to all signals was found, and the unsaturation was calculated assuming it was due entirely to propenyl ether.

Table 1 shows the results obtained.

### Example 2.

273 g of a hydrogen siloxane of average composition: 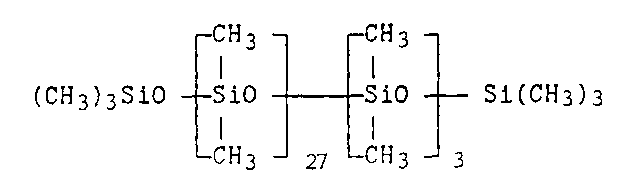 1,200 g of an allyl polyether represented by the average composition: 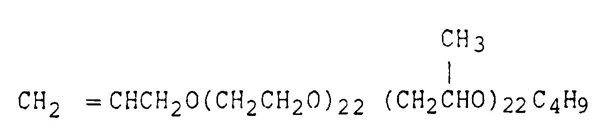 800 g of toluene, 0.2 g of a 2 % isopropanol solution of chloroplatinic acid, and 0.2 g of potassium acetate as pH regulator, were weighed out and reacted together under toluene reflux for 6 hours. Residual SiH was practically undetected. The reaction solution was divided into two equal parts, one of which was strip purified and filtered without further modification to give the polyether silicone (X).

To the second part, 12 g of glacial acetic acid was added. After reaction for 5 hours under toluene reflux, strip purificaiton and filtration were carried out to give the polyether silicone (XI). The viscosity ( η²⁵), density (d²⁵) and refractive index (n_{D}²⁵) of this polyether silicone (IX) were 1,760 cs, 1.030, and 1.4472 respectively.

A propionaldehyde generation test and unsaturation degree test were carried out on the polyether silicone obtained in precisely the same way as in Example 1. Table 1 shows the results.

### Example 3.

601 g of a hydrogen siloxane of average composition: 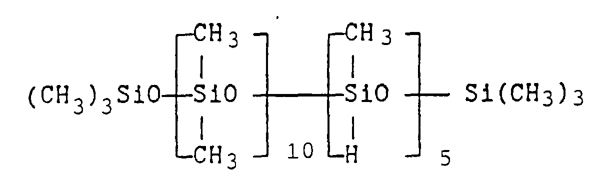 1,135 g of an allyl polyether represented by the average composition: CH₂=CHCH₂O(CH₂CH₂O)₉H, 1,200 g of isopropanol, 1 g of a 2 % isopropanol solution of chloroplatinic acid, and 1 g of potassium acetate as pH regulator, were weighed out and reacted together under reflux for 4 hours. The residual SiH was then treated with a 5 % methanol solution of KOH at 30 - 40°C for 2 hours in order to eliminate it from the reaction system.

Next, after adding 1.2 g of concentrated hydrochloric acid, steam at 3 kg/cm² was introduced with stirring for 4 hours, and the reaction solution was strip purified and filtered to give the purified polyether silicone (XII). The viscosity ( η²⁵), density (d²⁵) and refractive index (n_{D}²⁵) of this polyether silicone (XII) were 616 cs, 1.08, and 1.4502 respectively.

A propionaldehyde generation test and unsaturation degree test were carried out on the polyether silicone obtained in precisely the same way as in Example 1. Table 1 shows the results.

**Table 1**

| Sample | Quantity of Propionaldehyde | Odor | Degree of Unsaturation |
|---|---|---|---|
| (VIII) | 2,000 ppm | × | 0.04 |
| (IX) | 0 ppm | ⓞ | no more than 0.002 |
| (X) | 3,000 ppm | × | 0.05 |
| (XI) | 20 ppm | ○ ∼ Δ | no more than 0.002 |
| (XII) | 10 ppm | ○ | no more than 0.002 |
| Intensity of Odor ⓞ: Practically odorless ○: Very slight odor (not sufficient to identify the odorous constituent) Δ: Slight odor (sufficient to identify the odorous constituent as propionaldehyde) ×: Strong odor of propionaldehyde | | | |

## Claims

1. A method for purifying a polyether silicone prepared by an addition reaction of one or more hydrogen siloxanes represented by at least one of the following structural formulae: 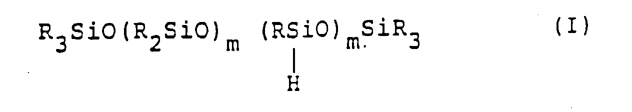 where R is a univalent substituted or unsubstituted hydrocarbon group, m is 0 or a positive integer, and n is a positive integer; 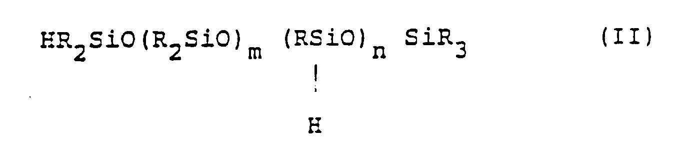 where R and m have the same significance as in formula (I), and n is 0 or a positive integer; and 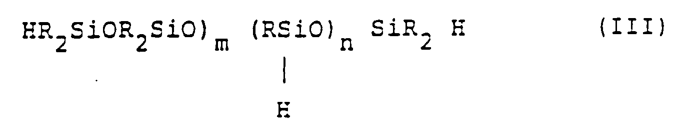 where R, m and n have the same significance as in formula (II);
with a polyoxyalkylene represented by the formula:
BO(CₚH₂ₚO)ₓR" (IV)
where B is a hydrocarbon group containing terminal double bonds, R" is a hydrogen or a lower alkyl group or an acyl group, p is 2 or 3, and x is a positive integer; in the presence of a platinum catalyst, comprising treating the polyether silicone, wherein the -Si-H groups have been eliminated, with water of pH no greater than 7 containing an acid, the quantity of the water used being from 1 to 100 weight % with respect to the quantity of the unpurified polyether silicone, said acid decomposing impurities so that odorous substances are produced, and removing said odorous substances from the reaction product by heating to a temperature below the boiling point of water, stirring and strip purification, wherein the degree of unsaturation due to residual polyether containing double bonds is no greater than 0.002 meq/g and when the purified polyether silicone is treated in a closed system for 24 hours at 60°C with a quantity of 10⁴N aqueous hydrochloric acid equivalent to the quantity of said polyether silicone, the total quantity of ketones and aldehydes produced is no greater than 100 ppm of said polyether silicone.

2. A method as claimed in Claim 1, wherein the acid is selected from mineral acids, organic acids, and Lewis acids.

3. A method as claimed in Claim 2, wherein the acid is selected from hydrochloric acid, formic acid, acetic acid and trifluoroacetic acid.

4. A method as claimed in any preceding claim, wherein the treatment is carried out at a temperature not higher than the boiling point of water.

5. A method as claimed in any preceding claim, wherein the main component of polyether silicone is an organopoly-siloxane-containing polyoxyalkylene group represented by the formula: 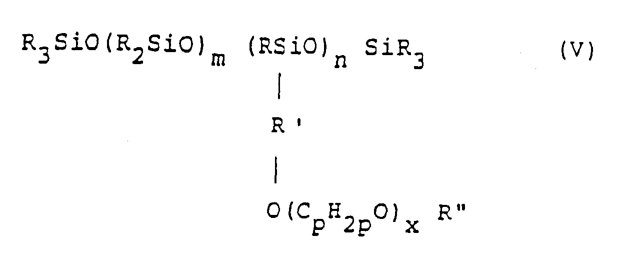 where R, m and n have the same significance as in formula (I); R", p and x have the same significance as in formula (IV); and R' is a bivalent hydrocarbon group), or 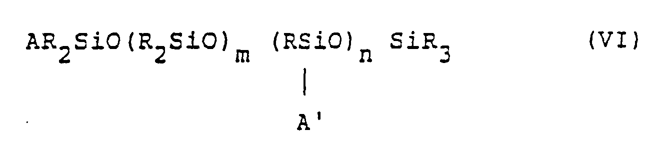 where A and A' are both represented by the formula:
-R'O(CₚH₂ₚO)ₓ R"; R, R', R", m, p and x have the same significance as in formula (V); and n is 0 or a positive integer, or 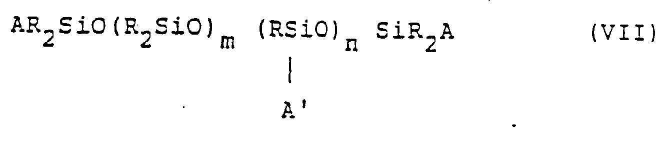 where A, A', R, m and n have the same significance as in formula (VI).

6. A cosmetic composition comprising purified polyether silicones prepared according to Claim 1.

## Patentansprüche

1. Verfahren zur Reinigung eines Polyethersilikons, das durch eine Additionsreaktion von einem oder mehreren Wasserstoffsiloxanen mindestens einer der folgenden Strukturformeln: 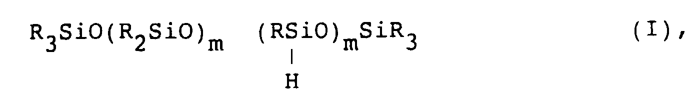 in der R eine einbindige, substituierte oder unsubstituierte Kohlenwasserstoffgruppe ist, m 0 oder eine positive Zahl ist und n eine positive Zahl ist, 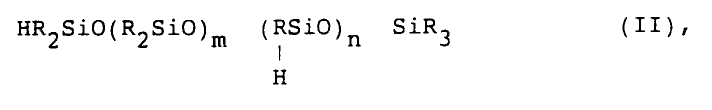 in der R und m die gleiche Bedeutung wie in Formel (I) aufweisen und n 0 oder eine positive Zahl ist, und 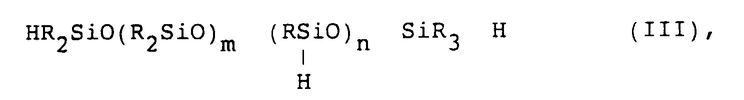 in der R, m und n die gleiche Bedeutung wie in Formel (II) aufweisen,
mit einem Polyoxyalkylen der Formel:
BO(CₚH₂ₚO)ₓ R" (IV),
in der B eine Kohlenwasserstoffgruppe ist, die endständige Doppelbindungen enthält, R" Wasserstoff oder eine niedere Alkylgruppe oder eine Acylgruppe ist, p 2 oder 3 ist und x eine positive Zahl ist, in Gegenwart eines Platinkatalysators hergestellt worden ist,
das die Behandlung des Polyethersilikons, in dem die -Si-H-Gruppen eliminiert worden sind, mit Wasser mit einem pH-Wert von nicht größer als 7, das eine Säure enthält, wobei die Menge des verwendeten Wassers 1 bis 100 Gew.-% in bezug auf die Menge des ungereinigten Polyethersilikons ist und die Säure Verunreinigungen zersetzt, so daß riechende Substanzen erzeugt werden, und die Entfernung dieser riechenden Substanzen aus dem Reaktionsprodukt durch Erhitzen auf eine Temperatur unterhalb des Siedepunktes von Wasser, Rühren und Strippreinigung umfaßt, wobei das Ausmaß an Ungesättigtheit aufgrund von restlichem Polyether, der Doppelbindungen enthält, nicht größer als 0,002 meq/g ist und, wenn das gereinigte Polyethersilikon in einem geschlossenen System 24 Stunden lang bei 60 °C mit einer Menge von 10⁴ N wäßriger Salzsäure behandelt wird, die zu der Menge des Polyethersilikons äquivalent ist, die Gesamtmenge an Ketonen und Aldehyden, die erzeugt werden, nicht größer als 100 ppm des Polyethersilikons ist.

2. Verfahren nach Anspruch 1, bei dem die Säure ausgewählt ist aus Mineralsäure, organischen Säuren und Lewis-Säuren.

3. Verfahren nach Anspruch 2, bei dem die Säure ausgewählt ist aus Salzsäure, Ameisensäure, Essigsäure und Trifluoressigsäure.

4. Verfahren nach einem der vorhergehenden Ansprüche, bei dem die Behandlung bei einer Temperatur ausgeführt wird, die nicht höher ist als der Siedepunkt von Wasser.

5. Verfahren nach einem der vorhergehenden Ansprüche, bei dem die Hauptkomponente des Polyethersilikons eine Organopolysiloxan enthaltende Polyoxyalkylengruppe der Formel: 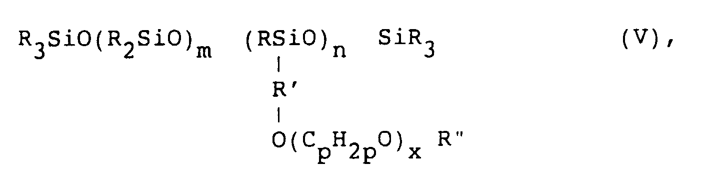 in der R, m und n die gleiche Bedeutung wie in Formel (I) aufweisen, R", p und x die gleiche Bedeutung wie in Formel (IV) aufweisen und R' eine zweibindige Kohlenwasserstoffgruppe ist, oder 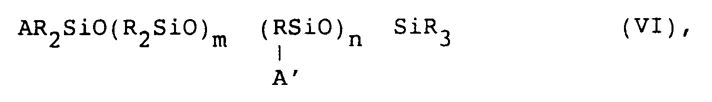 in der A und A' beide durch die Formel -R'O(CₚH₂ₚO)ₓ R" wiedergegeben sind, wobei R, R', R", m, p und x die gleiche Bedeutung wie in Formel (V) aufweisen und n 0 oder eine positive Zani ist, oder 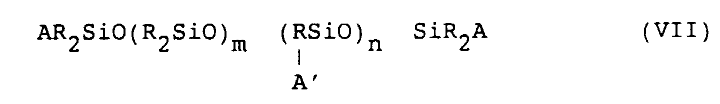 ist, in der A, A', R, m und n die gleiche Bedeutung wie in Formel (VI) aufweisen.

6. Kosmetische Zusammensetzung, die gereinigte Polyethersilikone hergestellt gemäß Anspruch 1 umfaßt.

## Revendications

1. Procédé de purification d'un polyéthersiloxane préparé au moyen d'une réaction d'addition d'un ou plusieurs hydrogénosiloxanes représentés par au moins une des formules développées suivantes : 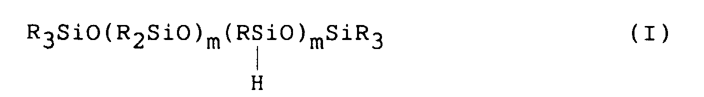 où R est un groupe hydrocarboné monovalent, substitué ou non substitué, m est 0 ou un nombre entier positif, et n est un nombre entier positif ; 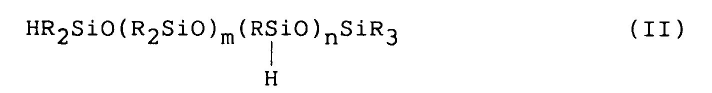 où R et m ont les mêmes significations que dans la formule (I), et n est 0 ou un nombre entier positif ; et 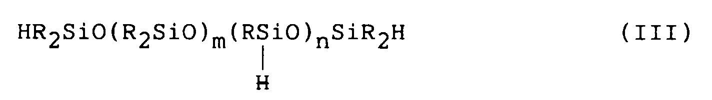 où R, m et n ont les mêmes significations que dans la formule (II) ;
avec un polyoxyalkylène représenté par la formule :
BO(CₚH₂ₚO)ₓR" (IV)
où B est un groupe hydrocarboné contenant des liaisons doubles terminales, R" est l'hydrogène ou un groupe alkyle inférieur ou un groupe acyle, p vaut 2 ou 3, et x est un nombre entier positif ; en présence d'un catalyseur au platine, comprenant le traitement du polyéthersiloxane, dont on a éliminé les groupes -Si-H, avec de l'eau ayant un pH ne dépassant pas 7, contenant un acide, la quantité d'eau utilisée étant de 1 à 100 % en poids par rapport à la quantité de polyéthersiloxane non purifié, ledit acide décomposant les impuretés, de sorte que des substances odorantes sont produites, et l'élimination desdites substances odorantes du produit de réaction par chauffage à une température située au-dessous du point d'ébullition de l'eau, l'agitation et la purification par extraction, le degré d'insaturation due au polyéther résiduel contenant des liaisons doubles ne dépassant pas 0,002 méq/g, et quand le polyéthersiloxane purifié est traité dans un système fermé à 60°C avec une quantité de solution aqueuse d'acide chlorhydrique 10⁻⁴ N qui équivaut à la quantité dudit polyéthersiloxane, la quantité totale de cétones et d'aldéhydes produits ne dépasse pas 100 ppm dudit polyéthersiloxane.

2. Procédé selon la revendication 1, dans lequel l'acide est choisi parmi les acides minéraux, les acides organiques et les acides de Lewis.

3. Procédé selon la revendication 2, dans lequel l'acide est choisi parmi l'acide chlorhydrique, l'acide formique, l'acide acétique et l'acide trifluoroacétique.

4. Procédé selon l'une quelconque des revendications précédentes, dans lequel on effectue le traitement à une température ne dépassant pas le point d'ébullition de l'eau.

5. Procédé selon l'une quelconque des revendications précédentes, dans lequel le principal composant du polyéthersiloxane est un groupe polyoxyalkylène contenant un organopolysiloxane, représenté par la formule : 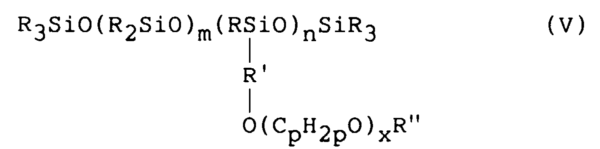 où R, m et n ont les mêmes significations que dans la formule (I) ; R", p et x ont les mêmes significations que dans la formule (IV) ; et R' est un groupe hydrocarboné bivalent, ou 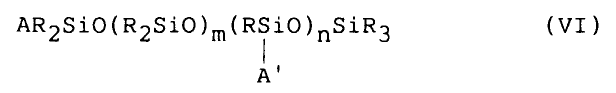 où A et A' sont représentés tous les deux par la formule :
-R'O(CₚH₂ₚO)ₓR" ; R, R', R", m, p et x ont les mêmes significations que dans la formule (V) ; et n est 0 ou un nombre entier positif, ou 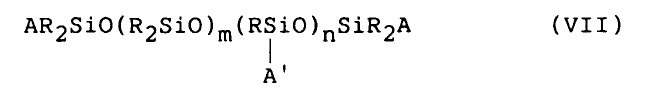 où A, A', R, m et n ont les mêmes significations que dans la formule (VI).

6. Composition cosmétique comprenant des polyéthersiloxanes purifiés préparés selon la revendication 1.
